# EUROPEAN PATENT SPECIFICATION

(11) **EP 4 092 878 B1**
(45) Date of publication and mention of the grant of the patent: **21.10.2026**
(21) Application number: 21174718.3
(22) Date of filing: 19.05.2021
(51) Int. Cl.: H02K 3/04

(54) **HIGH-PERFORMANCE COIL FOR ELECTRICAL MACHINE AND COIL ASSEMBLY FOR A LINEAR MOTOR**
HOCHLEISTUNGSSPULE FÜR EINE ELEKTRISCHE MASCHINE UND SPULENANORDNUNG FÜR EINEN LINEARMOTOR
BOBINE HAUTE PERFORMANCE POUR MACHINE ÉLECTRIQUE ET ENSEMBLE BOBINE POUR UN MOTEUR LINÉAIRE

(43) Date of publication of application: 23.11.2022
(60) Divisional application: 23205346.2 / 4 287 465
(73) Proprietor: ETEL S.A., 2112 Môtiers (CH)
(72) Inventor: Thabuis, Adrien, 2000 Neuchâtel (CH); Fasolo, Alessandro, 2000 Neuchâtel (CH); Veronesi, Daniele, 2035 Corcelles (CH); Xiaotao, Ren, 2000 Neuchâtel (CH); Perriard, Yves, 2000 Neuchâtel (CH)
(74) Representative: P&TS SA (AG, Ltd.)

(56) References cited:
- CH-A2- 715 403
- US-A1- 2013 249 344
- US-A1- 2014 339 949
- US-A1- 2019 245 401
- US-B1- 6 262 503
- US-B1- 6 355 993

## Description

### Field of the invention

The present invention relates to a high-performance coil, for an electrical machine, with improved copper filling factor. The present invention also relates to a coil assembly made of multiple high-performance coils and to an electrical machine, in particular a linear motor, comprising a mobile part integrating the coil assembly.

### Background of the invention

In electrical machines, such as electric motors, overlapped windings are used to improve the magnetic performances of the machines. In ironless electric motors, this comes with the possibility to increase the active conductor quantity in order to improve the motor performance.

In order to create an overlapped winding however, it is necessary that the conductor (usually round wire) changes plane in the coil in such a way to create the overlapping between adjacent wires of the coils. Usually, the change of plane is performed at the end-winding regions located on two opposite sides of the active region of the coil, implying a waste of material, since the conductor used in the transition is inactive as it does not contribute to the creation of force. In addition, solutions with variable wire section result in coil shapes with sharp end winding edges which are not optimal to limit the waste of material and the leak of magnetic flux. This limits the possibility to minimize the electrical resistance of the winding and the performances of the coil, in particular the ratio between the electric energy that is converted to mechanical power and the electric energy that is converted to heat, cannot therefore be increased further.

Several designs of overlapping coils exist that aim to maximize the active conductor quantity and the performance of the electrical machine. In all of them, the transition of the conductor between different planes is smooth, requiring complex shapes for the end-winding. Waste of material is therefore inevitable in these inactive regions. Even solutions with variable wire section result in sharp end winding edges which are not optimal to limit the waste of material and the leak of magnetic flux.

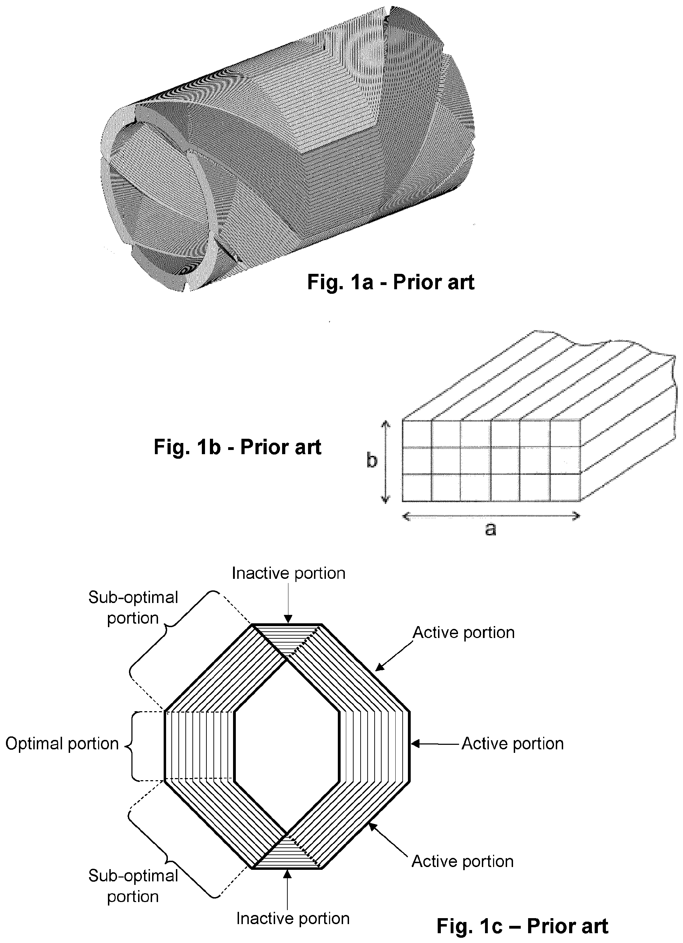

CH715403 for example discloses a rotary electric machine comprising a rotor and a stator separated by an air gap. The stator comprises a winding with a plurality of coils. Each coil as shown in Figure 1a has a cross section illustrated in Figure 1b having a plurality of wires. This cross-section has a thickness b measured radially from the inner side of the coil to the outer side of the coil, and a width a measured substantially perpendicular to the length of the wires and substantially parallel to the outer side of the coil, wherein the thickness b and the width a are variable along the coil. This winding increases the performance and more particularly the motor constant linking the generated torque to the copper losses.

According to CH715403, the transition between different active planes of the coil is done by a "transition step", consisting in two sharp corners of the conductor in the main body of the coil, with the consequent advantage of minimizing the end winding passive region, which is not providing benefit to the performance of the machine.

The coil shape shown in Figure 1c is the one disclosed in CH715403, which has been "flattened" to be suitable for a linear motor instead of a rotary motor. One can observe that the conductor thickness varies around the coil. In particular, the cross-section area of adjacent wires in the inactive portions of the coil is about half the cross-section area of adjacent wires in the optimal portions of the active portion of coil. Moreover, the cross-section area of adjacent wires in suboptimal portions of the active portion of coil is about 70% of the cross-section area of adjacent wires in the optimal portions of the active portion of coil. The inactive portions are basically triangular in such a way that several coils can be chained to form a motor winding with several phases (typically 3). The cross-section area of the wires in the inactive portions of the coil and the suboptimal cross-section area in suboptimal portions of the coil lead to high losses and reduce the motor performance.

US2014339949 discloses a preformed coil to produce a self-supporting airgap winding of a small electric motor, consisting of at least two preformed coils positioned to overlap at a circumference of the winding.

US2013249344 discloses a hollow-cylindrical coreless winding for an electric motor, comprising a plurality of single coils which overlap in a roof tile manner at a circumference of the winding.

US6355993 discloses a linear motor coil, comprising a plurality of coil units arranged linearly. Each coil unit is configured into a geometric polygonal shape defining a substantially planar band surrounding a void.

US2019245401 discloses motor coil substrate comprising a cylindrical shape insulating substrate and a plurality of wirings formed on the substrate. The wirings form a plurality of coils in spiral shapes.

US6262503 discloses an apparatus for cooling a current carrying coil having a plurality of wires wrapped in a particular shape. The coil has a working region and a non-working region. Openings are formed in the non-working region of the coil and a heat sink is arranged in each opening.

An aim of the present invention is to provide a high-performance coil for electrical machine which overcomes the limitations of the prior art.

In particular, an aim of the present invention is to provide a high-performance coil that is shaped to maximize the ratio between the electric energy that is converted to mechanical power and the electric energy that is converted to heat.

Another aim of the present invention is to provide a coil assembly with an improved copper filling factor.

A further aim of the present invention is to provide a coil assembly with improved heat dissipation.

### Brief summary of the invention

This object is solved by the subject matter of the independent claim 1. These aims are achieved notably by a coil for an electrical machine, comprising an active portion having at least a first and a second curved branch forming a central opening therebetween and at least a first and a second terminal rounded portion forming an integral part with the respective ends of said first and second curved branches. The radii of curvature of the outer lateral edge of respective first and second curved branches is larger than the radii of curvature of the outer edge of respective first and second terminal rounded portion. Each of the first and a second terminal rounded portions comprises a transition portion such that the bottom surface of respective first and second curved branches lies respectively within a first and second plane parallel to each other. The active portion comprises multiple superposed layers having each a first and second curved branches forming an integral conductive part with the respective first and second terminal portions. The active portion comprises empty spaces between respective first and second curved branches of each layer. The empty spaces extend from the outer lateral edge of respective first and second curved branches into the central opening of the coil.

In an embodiment, the transition portion of the first and second terminal rounded portions of each layer ensures that the first and second curved branches do not lie within the same plane. The height of the transition portions of the respective superposed first terminal rounded portions are offset with respect to the height of the transition portions of the respective superposed second terminal rounded portions to form an elliptical spiral path.

In an embodiment, the coil comprises insulation layers covering both sides of the first and second curved branches and both sides of the corresponding first and second terminal rounded portion of each layer to form together a laminated coil. The laminations are parallel to said first and second planes.

In an embodiment, the coil further comprises one or two heat sinks extending from an end portion of one terminal rounded portion or from an end portion of the first and second terminal rounded portions.

Another aspect of the invention relates to a coil assembly comprising N coils, N being a multiple of 3. Adjacent coils of each phase are intertwined. More particularly, a part of the first curved branch of each layer of two adjacent coils filled the corresponding empty spaces of the second curved branches of a third coil which is adjacent to one of said two adjacent coils.

In an embodiment, the empty spaces, formed by the superposition of the layers located at both ends of the coil assembly, are filled with copper to decrease the resistance of the coil assembly.

In an embodiment, the coil assembly comprises a single row of heat sinks extending along one longitudinal side of the coil assembly.

In an embodiment, the coil assembly comprises two rows of heat sinks extending along two opposite longitudinal sides of the coil assembly.

Another aspect of the invention relates to a coil for an electrical machine, comprising an active portion having a first and a second curved branch forming a central opening therebetween and at least a first and a second terminal rounded portion forming an integral part with the respective ends of said first and second curved branches. Each of the first and second terminal rounded portions comprises a step whose height corresponds to the thickness of each of the first and second curved branches such that a bottom surface of the second curved branch and a top surface of the first curved branch lie substantially within the same plane.

Another aspect of the invention relates to an electrical machine comprising a plurality of coils as described in any of paragraphs [0012] to [0021].

In an embodiment, the electrical machine is a linear motor comprising a stationary part having permanent magnets and a moving part comprising the coil assembly as described in any of paragraphs [0022] to [0026].

In an embodiment, the moving part comprises a longitudinal recess filled with cooling water. Heat sink extending along a longitudinal side of the coil assembly is at least partly positioned into the recess to be able to dissipate heat in the cooling fluid.

In an embodiment, the electrical machine is a rotary motor comprising a stator having a plurality of coils as described in any of paragraphs [0012] to [0021].

### Brief description of the drawings

The invention will be better understood with the aid of the description of several embodiments given by way of examples and illustrated by the figures, in which:
- Figure 1a shows a perspective view of a 6-coil, three-phase slotless winding made with six coils of non-constant width and thickness along a cross section according to the prior art;
- Figure 1b shows a perspective view of a portion of a coil of Figure 1a with a cross-section of a coil branch;
- Figure 1c shows the coil shape of a coil of Figure 1a, which has been "flattened" to be suitable for a linear motor instead of rotary motor;
- Figure 2 shows a schematic top view of a coil comprising two curved branches and two terminal rounded portions forming an integral part with the two branches according to an embodiment not covered by the claimed invention;
- Figure 3 shows a perspective view of the coil of Figure 2;
- Figure 4 shows a top view of Figure 3;
- Figure 5 shows a perspective partial view of a coil integrating a heat sink according to another embodiment not covered by the claimed invention
- Figure 6 shows a coil assembly for the mobile part of a linear motor according to another embodiment not covered by the claimed invention;
- Figure 7 shows a partial perspective view of three coils of the coil assembly of Figure 6 with a cross-section of the first and second branches of each coil;
- Figure 8 shows a perspective view of a coil comprising multiple superposed layers having each a first and second curved branches according to the invention
- Figure 9 shows a perspective view of a coil assembly for the mobile part of a linear motor comprising several coils of Figure 8 intertwined according to another embodiment;
- Figure 10 shows a partial perspective view of three coils of the coil assembly of Figure 9 with a cross-section of each coil showing superposed layers made of a first and a second branch;
- Figure 11 shows a top perspective view of Figure 10;
- Figure 12 shows a perspective view of a coil similar to the coil of Figure 8 integrating two heat sinks extending from respective first and second terminal rounded portion according to another embodiment;
- Figure 13 shows a perspective view of a coil assembly for the mobile part of a linear motor comprising several coils of Figure 12 intertwined according to another embodiment; and
- Figure 14 shows a schematic cross-section view of a terminal portion of the coil according to the embodiment of Figures 8 and 12.

### Detailed description of several embodiments of the invention

Coil assemblies, according to different embodiments described subsequently, are made of several identical coils designed to optimize the copper filling factor of the coil assembly as well as to minimize power loss. The coil assembly is configured to be integrated into a moving part slidably mounted on a stationary part of a linear motor as described for example WO2004/017500 or US2006/0175907.

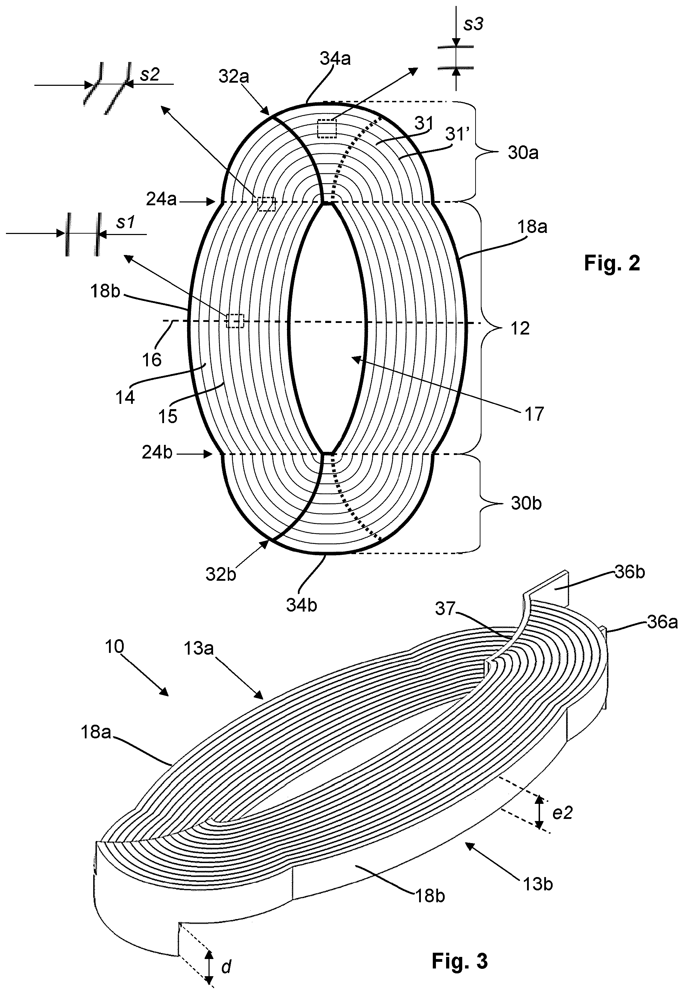

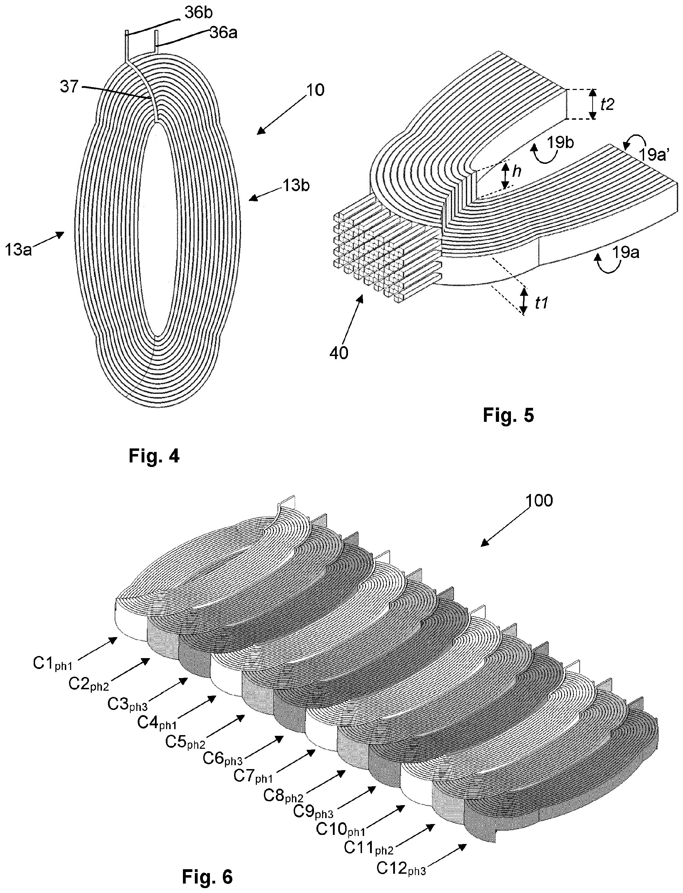

According to an embodiment not covered by the claimed invention, shown in Figures 2 to 5, the coil 10 comprises an active portion 12 and a first and a second terminal rounded portion 30a, 30b. The active portion 12 comprises a first and a second curved branch 13a, 13b whose respective radii of curvature are inverted to form therebetween a quasi-elliptical central opening 18. The first and second branches 13a, 13b are made of adjacent conducting curved paths 14 and insulation strips 15 therebetween. The first and second terminal rounded portions 30a, 30b are made of adjacent conductive rounded paths 31 and insulation strips 31' therebetween and form with the active portion 12 of the coil 10 an integral part such that the conductive paths are continuous from a coil input 36a to a coil output 36b as shown for example in Figure 4. The coil input and output can of course be swapped depending on the configuration of coil in the linear motor.

Each of the first and second terminal rounded portion 30a, 30b comprises a transition portion 32a, 32b which are in the form of a step shaped such that the conductive paths 31 are deflected by 90°. With reference to Figure 5, the height *h* of the step corresponds substantially to the thickness *t1, t2* of each of the first and second curved branches 13a, 13b. The bottom surface 19b of the second curved branch 13b and the top surface 19a' of the first curved branch 13a lie substantially within the same plane.

Referring to Figure 2, the adjacent conductive paths 14 have a cross-section that remains quasi-constant from a middle zone 16 of the active portion 12 to a transition zone 24a, 24b between the active portion 12 to respective first and second terminal rounded portion 30a, 30b as opposed to Figure 1c of the prior art where the cross-section area of the adjacent conductive paths is reduced by approximately 30% in the sub-optimal portions and 50% in the inactive portions.

More particularly, the ratio between the section area s2 of any adjacent conductive path 14 at the respective ends of the first and second curved branches 13a, 13b and the section area s1 of the corresponding conductive path 14 at the level of a middle zone 16 of the active portion 12 of the coil, is at least above 80% and preferably above 90%.

In addition, the section area s1 of any adjacent conductive path 14 at the level of a middle zone 16 of the active portion 12 of the coil corresponds to the section area s3 of the corresponding conductive path 31 at the level of respective first and a second terminal rounded portion 30a, 30b which is substantially constant over 180°, i.e. over the whole terminal portion.

The specific shape of the coil increases the magnetic force generated by the active portion 12 when a voltage is applied between the coil input and output 36a, 36b while reducing resistance in the first and second terminal portions thereby reducing heat generation and power loss.

The coil 10 may advantageously be produced by additive manufacturing which has the benefit of maximizing the copper fill factor thanks to geometrically perfectly adapted coil. The insulation strips are preferably made of ceramic. Micro porous ceramic provides a greater contact surface area and has therefore excellent heat dissipation and heat conducting properties. The ceramic may preferably be printed simultaneously with the copper.

Adjacent conductive paths 14, 31 made of copper and the ceramic strips 15, 31' therebetween of respective active portion 12 and first and second terminal rounded portion 30a, 30b form together an integral laminated coil with the laminations arranged perpendicularly to the plane of the coil 10 as readily apparent in Figure 5.

The coil according to this embodiment, which is not covered by the claimed invention, may be easily dimensioned according to the performance sought and additional laminations can be added to increase the magnetic force generated by the coil with minimal impact on the overall size of the coil. The ratio between the performance of the coil and its footprint is therefore optimal.

The shape and the space relationship between the first and second curved branches 13a, 13b of the active portion 12 of the coil 10 make it possible to create a coil assembly with a high ratio between the performance of the coil assembly and its footprint. More particularly, the three-phases coil assembly 100 illustrated in Figure 6, according to an embodiment, comprises twelves coils C1ₚₕ₁, C2ₚₕ₂, C3ₚₕ₃, C4ₚₕ₁, C5ₚₕ₂, C6ₚₕ₃, C7ₚₕ₁, C8ₚₕ₂, C9ₚₕ₃, C10ₚₕ₁, C11ₚₕ₂ C12ₚₕ₃. The second curved branch 13b of each coil is positioned on top of the first branch 13a (Figure 3) of an adjacent coil. The top surface of the second curved branch 13a of each coil lies within a first plane while the bottom surface of the first curved branch 13a of each coil lies within a second plane parallel to the first plane.

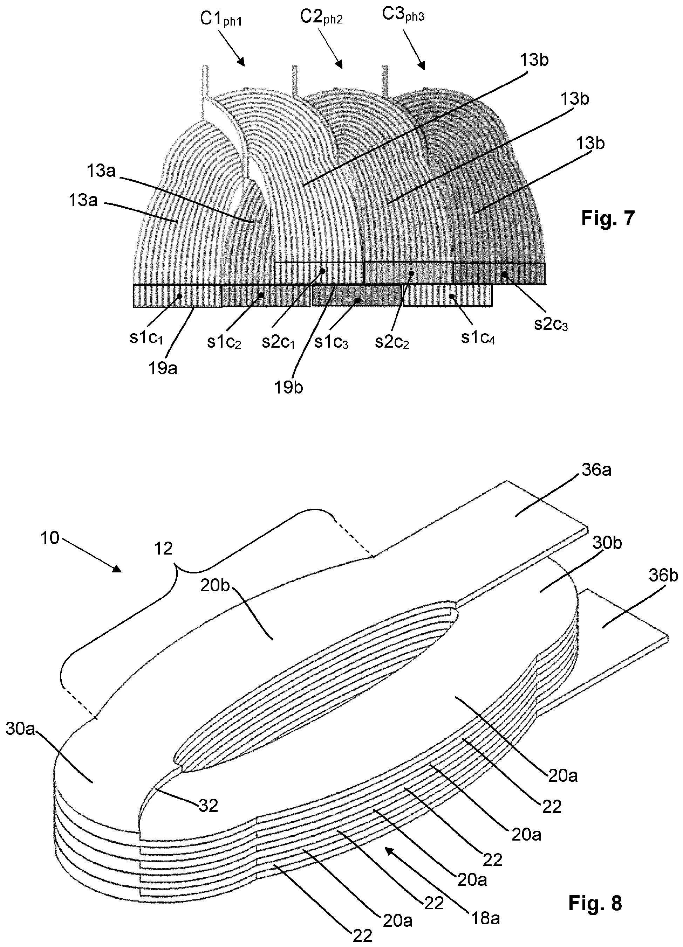

As shown in Figure 7, the first and second curved branch 13a of each adjacent coil C1ₚₕ₁, C2ₚₕ₂, C3ₚₕ₃ are juxtaposed while the cross-sections s1C₂, s2C₁, s1C₃, s2C₂, s1C₄, s2C₃ of respective first and second curved branches 13a, 13b of the corresponding coils C1ₚₕ₁, C2ₚₕ₂, C3ₚₕ₃ taken along the middle zone 16 of the active portion 12 (Figure 2) of each coil form a staggered pattern.

According to another embodiment covered by the claimed invention, illustrated in Figure 8, the coil 10 comprises an active portion 12 made of multiple superposed layers having each a first and second curved branches 20a, 20b forming an integral conductive part with respectively a first and a second terminal portion 30a, 30b. The active portion 12 of the coil comprises empty spaces 22 between respective first and second curved branches 20a, 20b of each layer. The empty spaces 22 extend from the outer lateral edge 18a, 18b of respective superposed first and second curved branches 20a, 20b into the quasi-elliptical central opening 17 of the coil 10.

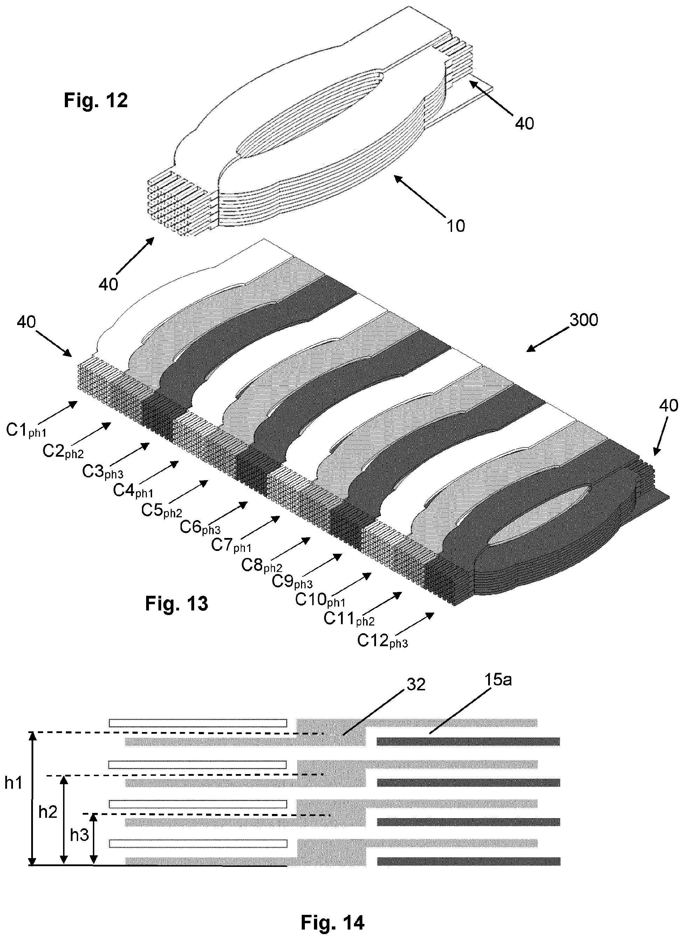

With reference to Figure 14, the first and second terminal rounded portions 30a, 30b of each layer comprises a transition portion 32 configured to ensure that the first and second arcuate branches 20a, 20b of the corresponding layer do not lie within the same plane. The median heights h1, h2, h3 of the transition portions 32 of the respective superposed first terminal rounded portions 30a with respect to the bottom surface of the coil are shifted relative to the height of the transition portions of the respective superposed second terminal rounded portions 30b to form an elliptical spiral path around an axis perpendicular to the plane of the coil from the coil input 36a to the coil output 36b as shown in Figure 8. The elliptical spiral configuration of the coil increases the surface of the coil for improved heat dissipation. In another non-illustrated embodiment, the coil is made of multiple superposed layers, wherein each layer has a similar shape of the coil of Figure 3 but with a reduced height.

The coil 10 is produced by a two-steps manufacturing process. The coil of Figure 8 is first integrally formed by additive manufacturing to obtain an integral part of a conductive material, preferably in copper. The coil is then immersed into a bath to build up a ceramic coating 15a for insulation of the coil as schematically shown in Figure 14. A laminated coil is obtained with the laminations extending parallel to the plane of the coil.

With reference to Figure 5, the coil of Figure 3 may comprise one or two heat sink 40 extending from one or both first and second terminal rounded portion of the coil 10 so as to dissipate heat according to another embodiment. Likewise, with reference to Figure 12, the coil of Figure 8 may comprise one or two heat sinks 40 extending from one or both first and second terminal rounded portion according to another embodiment.

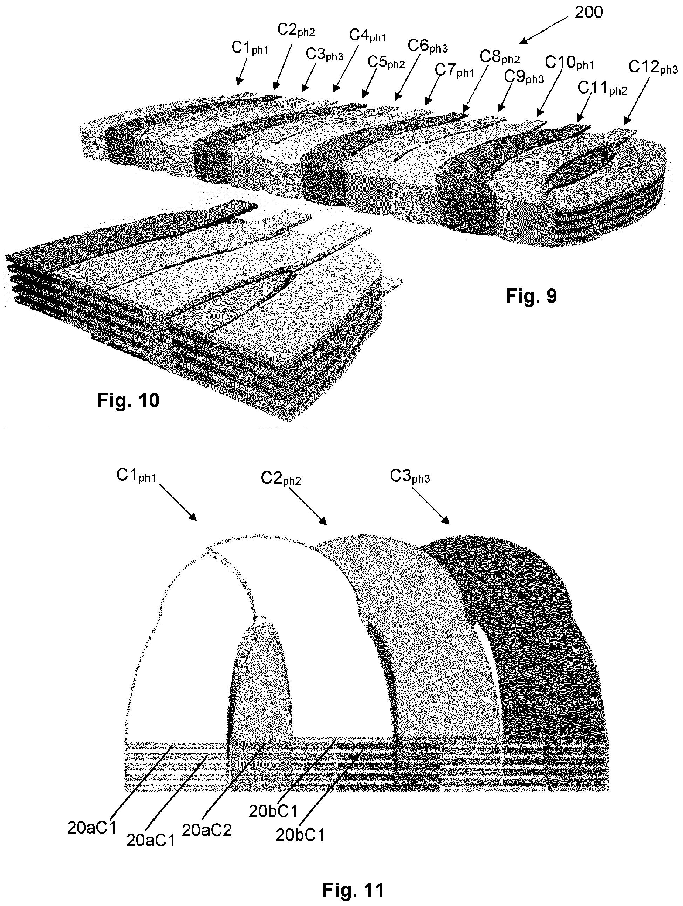

The coil of Figure 8 is adapted to form a three-phase coil assembly 200 according to Figures 9 to 11 with an optimized copper filing factor. The coil assembly may for example comprise twelve coils C1ₚₕ₁, C2ₚₕ₂, C3ₚₕ₃, C4ₚₕ₁, C5ₚₕ₂, C6ₚₕ₃, C7ₚₕ₁, C8ₚₕ₂, C9ₚₕ₃, C10ₚₕ₁, C11ₚₕ₂ C12ₚₕ₃. Adjacent coils of each phase C1ₚₕ₁, C2ₚₕ₂, C3ₚₕ₃ are intertwined. As particularly shown in Figure 11, a part of the first curved branch 20a of each layer of two adjacent coils C2ₚₕ₂, C3ₚₕ₃ filled the corresponding empty spaces 22 (Figure 8) of the second curved branches 20a of a third coil C1ₚₕ₁ which is adjacent to one of the two adjacent coils. Intertwined coils according to this embodiment advantageously increase the surface for heat transfer between the different phases of the coil assembly 200.

The empty spaces 22, formed by the superposition of the layers located at both ends of the coil assembly which are not intertwined, may be filled with copper to decrease the resistance of the coil assembly, thereby improving the performance of the coil assembly.

Figure 13 shows another embodiment of a coil assembly 300 covered by the claimed invention, similar to the coil assembly 200 of Figure 9, comprising twelve coils C1ₚₕ₁, C2ₚₕ₂, C3ₚₕ₃, C4ₚₕ₁, C5ₚₕ₂, C6ₚₕ₃, C7ₚₕ₁, C8ₚₕ₂, C9ₚₕ₃, C10ₚₕ₁, C11ₚₕ₂ C12ₚₕ₃. Each of these coils comprises two heat sink 40 extending from an end portion of its first and second terminal rounded portions to form two rows of heat sinks extending along two opposite longitudinal sides of the coil assembly.
The coil assembly 100, 200, 300 as described above is configured to be integrated into a moving part slidably mounted on a stationary part of a linear motor. In an advantageous non-illustrated embodiment, the coil assembly 300 or the coil assembly 100 comprising a heat sink (non-illustrated) extending along at least one of its two opposite longitudinal sides is integrated in the moving part of a linear motor. The moving part comprises a longitudinal recess filled with cooling fluid. The heat sink extending along one longitudinal side of the coil assembly is at least partly positioned into the recess to be able to dissipate heat in the cooling fluid to optimize the cooling of the coil assembly.

### Reference list

Coil 10
   Active portion 12
      First and second curved branches 13a, 13b
      Adjacent curved conducting paths 14
      Insulation strips 15
      Insulation coating 15a (2^{nd} embodiment)
      Middle zone 16
         Conductive path section s1
      Ends section s2
      Central opening 17
      Outer lateral edges 18a, 18b
      Bottom surface (of the first branch) 19a
      Top surface (of the first branch) 19a'
      Bottom surface (of the second branch) 19b
      Distance between the first and second bottom surfaces d
      Thickness of the first and second branches *t1*, *t2*
      Superposed integral conductive parts 20a, 20b (2^{nd} embodiment)
         Empty spaces 22
   Transition zones 24a, 24b
   Terminal rounded portion 30a, 30b
      Adjacent curved conducting paths 31
      Insulation strips 31'
      transition portion 32a, 32b
         Step height h
      Outer edges 34a, 34b
      Coil input and output 36a, 36b
         Curved wall 37
      Conductive interconnection portions 38 (2^{nd} embodiment)
      Heat sink 40
Coil assembly 100, 200, 300
   C1ₚₕ₁, C2ₚₕ₂, C3ₚₕ₃, C4ₚₕ₁, C5ₚₕ₂, C6ₚₕ₃, C7ₚₕ₁, C8ₚₕ₂, C9ₚₕ₃, C10ₚₕ₁, C11ₚₕ₂ C12ₚₕ₃

## Claims

1. A laminated coil (10) for an electrical machine, with the laminations extending parallel to the plane of the coil, comprising an active portion (12) having at least a first and a second curved branch (20a, 20b) forming quasi-elliptical central opening (18) therebetween and at least a first and a second terminal rounded portion (30a, 30b) forming an integral part with the respective ends of said first and second curved branches (20a, 20b), wherein the radii of curvature of the outer lateral edge (18a, 18b) of respective first and second curved branches (20a, 20b) is larger than the radii of curvature of the outer edge of respective first and second terminal rounded portion (30a, 30b), and wherein each of said first and second terminal rounded portions (30a, 30b) comprises a transition portion (32) such that the bottom surface of respective first and second curved branches (20a, 20b) lies respectively within a first and second plane parallel to each other, wherein the active portion (12) comprises multiple superposed layers having each a first and second curved branches (20a, 20b) forming an integral conductive part with the respective first and second terminal portions (30a, 30b), the active portion (12) comprising empty spaces (22) between respective first and second curved branches (20a, 20b) of each layer, said empty spaces (22) extending from the outer lateral edge (18a, 18b) of respective first and second curved branches (20a, 20b) into the central opening (18) of the coil (10).

2. The laminated coil (10) according to claim 1, wherein the transition portion (32) of said first and second terminal rounded portions (30a, 30b) of each layer ensures that said first and second curved branches (20a, 20b) do not lie within the same plane, and wherein the height of the transition portions (32) of the respective superposed first terminal rounded portions (30a) are shifted with respect to the height of the transition portions of the respective superposed second terminal rounded portions (30b) to form an elliptical spiral path.

3. The laminated coil (10) according to claim 2, comprising an insulation coating (15a) covering both sides of the first and second arcuate branches (13a, 13b) and both sides of the corresponding first and second terminal rounded portion (30a, 30b) of each layer to form together a laminated coil, wherein the laminations are parallel to said first and second planes.

4. The laminated coil according to any of the preceding claims, further comprising one or two heat sinks (40) extending from an end portion of one terminal rounded portion or from an end portion of said first and second terminal rounded portions (30a, 30b).

5. Coil assembly (200; 300) comprising N coils (C1ₚₕ₁, C2ₚₕ₂, C3ₚₕ₃, C4ₚₕ₁, C5ₚₕ₂, C6ₚₕ₃, C7ₚₕ₁, C8ₚₕ₂, C9ₚₕ₃, C10ₚₕ₁, C11ₚₕ₂ C12ₚₕ₃) according to any preceding claims, N being a multiple of 3, wherein adjacent coils of each phase (C1ₚₕ₁, C2ₚₕ₂, C3ₚₕ₃) are intertwined, wherein a part of the first curved branch (20a) of each layer of two adjacent coils (C2ₚₕ₂, C3ₚₕ₃) filled the corresponding empty spaces (22) of the second curved branches (20a) of a third coil (C1ₚₕ₁) which is adjacent to one of said two adjacent coils.

6. The coil assembly (200; 300) according to claim 5, wherein the empty spaces (22), formed by the superposition of the layers located at both ends of the coil assembly, are filled with copper to decrease the resistance of the coil assembly.

7. The coil assembly (200; 300) according to claim 5 or 6comprising two rows of heat sinks (40) extending along two opposite longitudinal sides of the coil assembly.

8. Linear motor comprising a stationary part having permanent magnet and a moving part comprising the coil assembly (200; 300) according to any of claims 5 to 7.

## Patentansprüche

1. Laminierte Spule (10) für eine elektrische Maschine, wobei sich die Lamellen parallel zur Ebene der Spule ausstrecken, umfassend einen aktiven Abschnitt (12) mit mindestens einem ersten und einem zweiten gekrümmten Zweig (20a, 20b), welcher dazwischen eine quasi-elliptische zentrale Öffnung (18) bilden, und mindestens einen ersten und einen zweiten endständigen abgerundeten Abschnitt (30a, 30b), welche einen einstückigen Teil mit den jeweiligen Enden der besagten ersten und zweiten gekrümmten Zweige (20a, 20b) bilden,
worin die Krümmungsradien der äusseren Seitenkante (18a, 18b) der jeweiligen ersten und zweiten gekrümmten Zweige (20a, 20b) grösser sind als die Krümmungsradien der äusseren Kante des jeweiligen ersten und zweiten endständigen abgerundeten Abschnitts (30a, 30b), und
worin jeder der besagten ersten und zweiten endständigen abgerundeten Abschnitte (30a, 30b) einen Übergangsabschnitt (32) umfasst, sodass die Bodenfläche der jeweiligen ersten und zweiten gekrümmten Zweige (20a, 20b) jeweils innerhalb einer ersten bzw. zweiten Ebene liegt, welche parallel zueinander verlaufen,
worin der aktive Abschnitt (12) mehrere übereinanderliegende Schichten umfasst, welche jeweils einen ersten und einen zweiten gekrümmten Zweig (20a, 20b) aufweisen, die einen einstückigen leitfähigen Teil mit den jeweiligen ersten und zweiten endständigen Abschnitten (30a, 30b) bilden, wobei der aktive Abschnitt (12) Hohlräume (22) zwischen den jeweiligen ersten und zweiten gekrümmten Zweigen (20a, 20b) jeder Schicht umfasst, wobei sich die besagten Hohlräume (22) von der äusseren Seitenkante (18a, 18b) der jeweiligen ersten und zweiten gekrümmten Zweige (20a, 20b) in die zentrale Öffnung (18) der Spule (10) erstrecken.

2. Laminierte Spule (10) gemäss Anspruch 1, worin der Übergangsabschnitt (32) der besagten ersten und zweiten endständigen abgerundeten Abschnitte (30a, 30b) jeder Schicht sicherstellt, dass die besagten ersten und zweiten gekrümmten Zweige (20a, 20b) nicht in derselben Ebene liegen, und worin die Höhe der Übergangsabschnitte (32) der jeweiligen übereinanderliegenden ersten endständigen abgerundeten Abschnitte (30a) in Bezug auf die Höhe der Übergangsabschnitte der jeweiligen übereinanderliegenden zweiten endständigen abgerundeten Abschnitte (30b) versetzt ist, um einen elliptischen Spiralpfad zu bilden.

3. Laminierte Spule (10) gemäss Anspruch 2, umfassend eine Isolationsbeschichtung (15a), welche beide Seiten der ersten und zweiten gekrümmten Zweige (13a, 13b) und beide Seiten des entsprechenden ersten und zweiten endständigen abgerundeten Abschnitts (30a, 30b) jeder Schicht bedeckt, um zusammen eine lamellierte Spule zu bilden, worin die Lamellen parallel zu den besagten ersten und zweiten Ebenen verlaufen.

4. Laminierte Spule gemäss irgendeinem der vorhergehenden Ansprüche, ferner umfassend einen oder zwei Kühlkörper (40), der bzw. die sich von einem Endabschnitt eines endständigen abgerundeten Abschnitts oder von einem Endabschnitt der besagten ersten und zweiten endständigen abgerundeten Abschnitte (30a, 30b) erstreckt bzw. erstrecken.

5. Spulenanordnung (200; 300), umfassend N Spulen (C1ₚₕ₁, C2ₚₕ₂, C3ₚₕ₃, C4ₚₕ₁, C5ₚₕ₂, C6ₚₕ₃, C7ₚₕ₁, C8ₚₕ₂, C9ₚₕ₃, C10ₚₕ₁, C11ₚₕ₂ C12ₚₕ₃) gemäss irgendeinem der vorhergehenden Ansprüche, wobei N ein Vielfaches von 3 ist, worin benachbarte Spulen jeder Phase (C1ₚₕ₁, C2ₚₕ₂, C3ₚₕ₃) ineinander verschlungen sind, worin ein Teil des ersten gekrümmten Zweigs (20a) jeder Schicht von zwei benachbarten Spulen (C2ₚₕ₂, C3ₚₕ₃) die entsprechenden Hohlräume (22) der zweiten gekrümmten Zweige (20a) einer dritten Spule (C1ₚₕ₁), die an eine der besagten zwei benachbarten Spulen angrenzt, ausfüllt.

6. Spulenanordnung (200; 300) gemäss Anspruch 5, worin die Hohlräume (22), welche durch die Überlagerung der an beiden Enden der Spulenanordnung befindlichen Schichten gebildet werden, mit Kupfer gefüllt sind, um den Widerstand der Spulenanordnung zu verringern.

7. Spulenanordnung (100; 200; 300) gemäss Anspruch 5 oder 6, umfassend zwei Reihen von Kühlkörpern (40), welche sich entlang zwei gegenüberliegender Längsseiten der Spulenanordnung erstrecken.

8. Linearmotor, umfassend einen stationären Teil mit einem Permanentmagneten und einen beweglichen Teil, welcher die Spulenanordnung (100, 200) gemäss irgendeinem der Ansprüche 5 bis 7 umfasst.

## Revendications

1. Une bobine laminée (10) pour une machine électrique, la structure laminée s'étendant parallèlement au plan de la bobine, comprenant une partie active (12) comportant au moins une première et une seconde branches courbées (20a, 20b) délimitant entre elles une ouverture centrale sensiblement elliptique (18), ainsi qu'une première et une seconde parties terminales arrondies (30a, 30b) faisant partie intégrante des extrémités respectives desdites première et seconde branches courbées (20a, 20b), dans laquelle les rayons de courbure du bord latéral extérieur (18a, 18b) des première et seconde branches courbées respectives (20a, 20b) sont supérieurs aux rayons de courbure du bord extérieur des première et seconde parties terminales arrondies respectives (30a, 30b), et dans laquelle chacune desdites première et seconde parties terminales arrondies (30a, 30b) comprend une portion de transition (32), de sorte que la surface inférieure des première et seconde branches courbées respectives (20a, 20b) est située respectivement dans un premier et un second plans parallèles l'un à l'autre, la partie active (12) comprenant plusieurs couches superposées, chacune comportant une première et une seconde branches courbées (20a, 20b) formant avec les première et seconde parties terminales respectives (30a, 30b) une partie conductrice d'un seul tenant, la partie active (12) comportant des espaces vides (22) entre les première et seconde branches courbées respectives (20a, 20b) de chaque couche, lesdits espaces vides (22) s'étendant depuis le bord latéral extérieur (18a, 18b) des première et seconde branches courbées respectives (20a, 20b) jusqu'à l'ouverture centrale (18) de la bobine (10).

2. La bobine laminée (10) selon la revendication 1, dans laquelle la portion de transition (32) desdites première et seconde parties terminales arrondies (30a, 30b) de chaque couche est configurée de manière que lesdites première et seconde branches courbées (20a, 20b) ne soient pas situées dans un même plan, et dans laquelle les hauteurs des portions de transition (32) des premières parties terminales arrondies respectives (30a) superposées sont décalées par rapport aux hauteurs des portions de transition (32) des secondes parties terminales arrondies respectives (30b) superposées, de manière à former un trajet spiralé elliptique.

3. La bobine laminée (10) selon la revendication 2, comprenant un revêtement isolant (15a) recouvrant les deux faces des première et seconde branches courbées (20a, 20b) ainsi que les deux faces des première et seconde parties terminales arrondies correspondantes (30a, 30b) de chaque couche, de sorte que lesdites couches forment ensemble une bobine laminée, les couches laminées étant parallèles auxdits premier et second plans.

4. La bobine laminée (10) selon l'une quelconque des revendications précédentes, comprenant en outre un ou deux dissipateurs thermiques (40) s'étendant depuis une portion d'extrémité d'une partie terminale arrondie ou depuis une portion d'extrémité desdites première et seconde parties terminales arrondies (30a, 30b).

5. Ensemble de bobines (200 ; 300) comprenant N bobines (C1ph1, C2ph2, C3ph3, C4ph1, C5ph2, C6ph3, C7ph1, C8ph2, C9ph3, C10ph1, C11ph2, C12ph3) selon l'une quelconque des revendications précédentes, N étant un multiple de 3, les bobines adjacentes de chaque phase étant entrelacées, une partie de la première branche courbée (20a) de chaque couche de deux bobines adjacentes (C2ph2, C3ph3) remplissant les espaces vides (22) correspondants des secondes branches courbées (20b) d'une troisième bobine (C1ph1) adjacente à l'une desdites deux bobines adjacentes.

6. L'ensemble de bobines (200 ; 300) selon la revendication 5, dans lequel les espaces vides (22) résultant de la superposition des couches situées aux deux extrémités de l'ensemble de bobines sont remplis de cuivre de manière à diminuer la résistance électrique de l'ensemble de bobines.

7. L'ensemble de bobines (200 ; 300) selon la revendication 5 ou 6, comprenant deux rangées de dissipateurs thermiques (40) s'étendant le long de deux côtés longitudinaux opposés de l'ensemble de bobines.

8. Moteur linéaire comprenant une partie fixe comportant des aimants permanents et une partie mobile comprenant l'ensemble de bobines (200 ; 300) selon l'une quelconque des revendications 5 à 7.
